# EUROPÄISCHE PATENTSCHRIFT

(11) **EP 2 196 824 B1**
(45) Veröffentlichungstag und Bekanntmachung des Hinweises auf die Patenterteilung: **18.04.2012**
(21) Anmeldenummer: 09015124.2
(22) Anmeldetag: 07.12.2009
(51) Int. Cl.: G01S 19/02, G01S 19/08

(54) **Verfahren und Vorrichtung zur Integritätskommunikation in einem Satellitennavigationssystem**
Device and method for integrity communication in a satellite navigation system
Procédé et dispositif de communication de l'intégrité dans un système de navigation par satellite

(30) Priorität: 10.12.2008 DE 102008061276
(43) Veröffentlichungstag der Anmeldung: 16.06.2010
(73) Patentinhaber: Astrium GmbH, 82024 Taufkirchen (DE)
(72) Erfinder: Trautenberg, Hans L., Dr., 85521 Ottobrunn (DE)

(56) Entgegenhaltungen:
- US-A1- 2008 007 452
- OEHLER V ET AL: "The Galileo Integrity Concept" ION GNSS. INTERNATIONAL TECHNICAL MEETING OF THE SATELLITEDIVISION OF THE INSTITUTE OF NAVIGATION, WASHINGTON, DC, US, 21. September 2004 (2004-09-21), Seiten 604-615, XP002375520
- HERNÁNDEZ C ET AL: "GALILEO Integrity: The Ground Segment Computation Algorithm Perspective" ION GNSS. INTERNATIONAL TECHNICAL MEETING OF THE SATELLITEDIVISION OF THE INSTITUTE OF NAVIGATION, WASHINGTON, DC, US, Nr. 19TH, 26. September 2006 (2006-09-26), Seiten 2634-2645, XP002521139

## Beschreibung

Die Erfindung betrifft ein Verfahren und eine Vorrichtung zur Integritätskommunikation in einem Satellitennavigationssystem gemäß Anspruch 1 bzw. 4.

Satellitensysteme zur weltweiten Navigation (GNSS; GNSS = Global Navigation Satellite System, kurz Satellitennavigationssystem) werden zur Positionsbestimmung und Navigation auf der Erde und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System (Raumsegment), ein mit einer zentralen Berechnungsstation verbundenes erdfestes Empfangseinrichtungs-System (Bodensegment), das mehrere Bodenstationen sowie Galileo-Sensorstationen (GSS) umfasst, sowie Nutzungssysteme auf, welche die von den Satelliten per Funk übermittelten Satellitensignale insbesondere zur Navigation auswerten und nutzen. Vom Raumsegment aus sendet jeder Satellit ein den Satelliten charakterisierenden Signal, das Signal-In-Space (SIS) aus. Das SIS umfasst insbesondere Informationen zum Orbit des Satelliten und einen Zeitstempel des Aussendezeitpunkts, die zur Detektion der Position eines Nutzers bzw. Nutzungssystems genutzt werden.

Eine genaue Detektion der Position eines Nutzers erfordert bei einem GNSS Integrität. Integrität bedeutet insbesondere, dass einerseits das GNSS imstande ist, einen Nutzer innerhalb einer bestimmten Zeitspanne zu warnen, wenn Teile des GNSS nicht für die Navigation benutzt werden sollen, beispielsweise bei Ausfall von Systemkomponenten, und dass andererseits der Nutzer den Navigationsdaten, die er über Satellitennavigationssignale von den Satelliten des GNSS erhält, vertrauen kann, insbesondere sich auf die Genauigkeit der empfangenen Navigationsdaten verlassen kann.

Beim Integritätskonzept von Galileo ist vorgesehen, dass an Nutzungssysteme folgende Informationen mittels der Navigationssignale übertragen werden:
- Informationen über die vorhergesagte Genauigkeit des gesendeten Navigationssignals für jeden Satelliten, d.h. eine Signal-In-Space-Accuracy (SISA) von Satelliten als Qualitätsmaß für ein SIS eines Satelliten;
- Statusmeldungen zur vorhergesagten Genauigkeit der Satellitensignalüberwachung durch das Bodensegment, d.h. eine Signal-In-Space-Monitoring-Accuracy (SISMA) für jeden Satelliten; und
- ein Integritätssignal in Form einer einfachen Fehleranzeige für ein fehlerhaftes SIS eines Satelliten "Not OK" (das sogenannte Integrity Flag IF) und der Schwellwert für die Meldung, dass der Fehler eines SIS eines Satelliten nicht mehr akzeptabel ist, der auch als IF Threshold bezeichnet wird. Wobei der IF Threshold eine Funktion von SISA und SISMA sein kann.

Diese Informationen versetzen ein Nutzungssystem in die Lage, die Integrität und das Integritätsrisiko selbst zu quantifizieren und zu bewerten.

Bei Galileo werden die SIS der Satelliten innerhalb des Bodensegments durch Auswertung der Messungen von den einzelnen Galileo-Sensorstationen (GSS) überwacht. Die Messungen des GSS werden in einer zentralen Integritätsprozessierungsstelle des Bodensegments verarbeitet, um die an die Nutzungssysteme zu verteilenden und oben aufgelisteten Integritätsinformationen zu ermitteln.

Mithilfe der bekannten Positionen der GSS in der Integritätsprozessierungsstelle werden die aktuelle Position eines Satelliten, die augenblicklich physikalisch im Satelliten realisierte Zeit und die Güte des abgestrahlten Signals und damit der Fehler des Satelliten bzw. des von ihm ausgesandten Signals im Raum, der sogenannte Signal-In-Space-Error (SISE) geschätzt.

Eine Voraussage der Verteilung des SISE kann durch eine Gaussverteilung mit der kleinsten Standardabweichung dargestellt werden. Diese Darstellung kann zum Beispiel im Sinne des Overbounding erfolgen. Diese Voraussage wird als die bereits oben erwähnte Signal-In-Space-Accuracy (SISA) bezeichnet, die vom Bodensegment über die Satelliten des Raumsegments an die Nutzungssysteme verteilt wird. Mit der SISA kann in obigem Sinne die Differenz zwischen der aktuellen 4-dimensionalen Position (Orbit und Uhrzeit) eines Satelliten und der vorausgesagten 4-dimensionalen Position, die in einer Navigationsnachricht enthalten ist, beschrieben werden.

Die Schätzung des SISE ist allerdings ein fehlerträchtiger Prozess. Daher wird in der Regel angenommen, dass die Verteilung des aktuellen SISE um den Wert des geschätzten SISE mit einer Gaussverteilung mit der Standardabweichung beschrieben werden kann, die als die bereits oben erwähnte Signal-In-Space-Monitoring-Accuracy (SISMA) bezeichnet wird. SISMA ist also ein Maß für die Genauigkeit der Schätzung des SISE für einen Satelliten im Bodensegment und wird ebenfalls an die Nutzungssysteme vom Bodensegment aus über die die Satelliten des Raumsegments SISMA übertragen. Bei Galileo ist vorgesehen, die SISMA-Werte für die Satelliten etwa alle 30 Sekunden zu übertragen. Um das Integritätsrisiko möglichst zu verringern, wird für jeden Satelliten der jeweils größte SISMA-Wert von den in einer Meßperiode vorhergesagten SISMA-Werten übertragen. Ein großer SISMA-Wert steht hierbei für eine geringe Genauigkeit der Satellitenüberwachung durch das Bodensegment und spiegelt damit ein erhöhtes Integritätsrisiko für einen Nutzer wieder.

Bei der Bestimmung des SISMA eines Satelliten, dessen Navigationssignale von mehreren GSS gemessen werden, kann weiterhin der Ausfall genau einer GSS der zum Messen vorgesehen GSS berücksichtigt werden, so dass sich der SISMA-Wert nochmals erhöht, da unter dem Ausfall die Messgenauigkeit leidet. Ein derartig bestimmter SISMA wird zur Unterscheidung vom herkömmlichen SISMA als Broadcast-SISMA bezeichnet. Die Broadcast-SISMA ist genau gesagt eine Funktion der vom Satelliten aus sichtbaren und der Integritätsprozessierungsstelle des Bodensegments verfügbar gemachten Messungen der GSS und wird unter der Annahme berechnet, dass die GSS keine Daten mehr bereitstellt, deren Verlust die Broadcast-SISMA am meisten ansteigen ließe. Dies führt zu einem sehr dichten Netzwerk aus GSSen. Außerdem können sehr hohe Breadcast-SISMA-Werte aufgrund der Annahme des Ausfalls einer GSS übertragen werden, wodurch viele Nutzungssysteme das Integritätsrisiko als sehr hoch einstufen und gegebenenfalls das GNSS nicht mehr nutzen, obwohl der tatsächliche SISMA einen viel kleineren Wert aufweist und Integrität gegeben wäre. Um dies zu vermeiden, wurde vorgeschlagen, für die Broadcast-SISMA-Werte jeweils einen Maximalwert in Form eines Schwellwerts festzulegen, der an sich nie überschritten wird. Das kann jedoch dazu führen, dass ein Nutzungssystem sein Integritätsrisiko unterschätzt und daher fälschlicherweise empfangene Navigationssignale und die darin enthaltenen Informationen als integer einstuft, nämlich dann, wenn eigentlich ein größeres Broadcast-SISMA als der Maximalwert gesendet werden müsste und auch der SISMA uber diesem Schwellwert liegt. Zudem steigt durch die Beschränkung des Broadcast SISMAs durch eine obere Schranke das Kontinuitätsrisiko an, da nicht mehr in jedem Fall sichergestellt ist, dass der Benutzer beim Ausfall einer GSS seinen verwendeten SISMA für eine bestimmte Zeit weiter verwenden kann, da ja dieser Verlust nicht mehr in den an den Benutzer übermittelten SISMA berücksichtigt war.

Die US2008/0007452A1 beschreibt eine Vorrichtung zum Erzeugen von Integritätsnachrichten in einem GNSS, das ein Raumsegment mit mehreren Satelliten, die Navigationssignale zum Empfangen und Auswerten durch Nutzungssysteme für die Positionsbestimmung aussenden, und ein Bodensegment mit mehreren Beobachtungsstationen, welche die Satelliten überwachen, umfasst. Das Bodensegment steuert die Integritätskommunikation dadurch, dass es Integritätsinformationen über die Satelliten an Nutzungssysteme mit den Navigationssignalen verteilt, wobei die Integritätsinformationen normale, verschlechterte oder inaktive Beobachtungsstationen des GNSS signalisieren und damit dem Broadcast-SISMA entsprechen, der im Unterschied zum SISMA den Ausfall einer Beobachtungsstation des Bodensegments berücksichtigt.

Aufgabe der vorliegenden Erfindung ist es daher, ein Verfahren und eine Vorrichtung zur Integritätskommunikation in einem Satellitennavigations system vorzuschlagen, mit denen die Unterschätzung des Integritätsrisikos verringert, wenn nicht gar vermieden werden kann.

Diese Aufgabe wird durch ein Verfahren ein Verfahren zur Integritätskommunikation in einem Satellitennavigationssystem mit den Merkmalen von Anspruch 1 und eine entsprechende Vorrichtung mit den Merkmalen von Anspruch 4 erreicht. Weitere Ausgestaltungen der Erfindung sind Gegenstand der abhängigen Ansprüche.

Ein wesentlicher Gedanke der Erfindung besteht darin, für die Übertragung des Broadcast-SISMA für einen Satelliten nicht nur einen vorgegebenen Schwellwert heranzuziehen, sondern auch den SISMA des Satelliten, um eine Unterschätzung des Integritätsrisikos durch einen Nutzer bzw. ein Nutzungssystem möglichst zu vermeiden. Hierzu wird nach der der vorliegenden Erfindung zugrunde liegenden Idee nicht nur der Broadcast-SISMA-Wert mit dem Schwellwert verglichen, sondern auch der SISMA-Wert. Abhängig von den Vergleichsergebnissen kann dann genauer entschieden werden, was als nächster Verfahrensschritt folgt: entweder die Übertragung des Broadcast-SISMA oder des Schwellwerts; oder es werden die zu übertragenden Integritätsinformationen geändert.

Die Erfindung betrifft nun gemäß einer Ausführungsform ein Verfahren zur Integritätskommunikation in einem Satellitennavigationssystem, das ein Raumsegment mit mehreren Satelliten, die Navigationssignale zum Empfangen und Auswerten durch Nutzungssysteme für die Positionsbestimmung aussenden, und ein Bodensegment mit mehreren Beobachtungsstationen, welche die Satelliten überwachen, umfasst, wobei das Bodensegment die Integritätskommunikation dadurch steuert, dass es Integritätsinformationen über die Satelliten an Nutzungssysteme mit den Navigationssignalen verteilt,
wobei die Integritätsinformationen für einen Satelliten einen ersten Wert SISMA und einen zweiten Wert Broadcast-SISMA zur Genauigkeit der Satellitenüberwachung durch das Bodensegment aufweist,
wobei der zweite Wert Broadcast-SISMA im Unterschied zum ersten Wert SISMA den Ausfall einer Beobachtungsstation des Bodensegments berücksichtigt,
wobei ein Schwellwert für den zweiten Wert Broadcast-SISMA vorgesehen ist, und wobei das Verfahren die folgenden Schritte aufweist:
Übertragen des Schwellwerts mit den Integritätsinformationen für einen Satelliten anstelle des zweiten Wertes Broadcast-SISMA, wenn dieser den Schwellwert überschreitet und der erste Wert SISMA kleiner als der Schwellwert für den Satelliten ist; und
Ändern der zu übertragenden Integritätsinformationen, sobald der zweite Wert Broadcast-SISMA und der erste Wert SISMA für den Satelliten jeweils den Schwellwert überschreiten.

Das Ändern der Integritätsinformationen kann beispielsweise das Kennzeichnen des Satelliten in den Integritätsinformationen als "nicht überwacht"/"not monitored" aufweisen.

Das Ändern der Integritätsinformationen kann auch das Erhöhen des ersten Wertes SISMA für den Satelliten mit den Integritätsinformationen aufweisen.

Eine weitere Ausführungsform der Erfindung betrifft ferner eine Vorrichtung zur Integritätskommunikation in einem Satellitennavigationssystem, das ein Raumsegment mit mehreren Satelliten, die Navigationssignale zum Empfangen und Auswerten durch Nutzungssysteme für die Positionsbestimmung aussenden, und ein Bodensegment mit mehreren Beobachtungsstationen, welche die Satelliten überwachen, umfasst, wobei die Vorrichtung ausgebildet ist, die Integritätskommunikation dadurch zu steuern, dass sie Integritätsinformationen über die Satelliten an Nutzungssysteme mit den Navigationssignalen verteilt,
wobei die Integritätsinformationen für einen Satelliten einen ersten Wert SISMA und einen zweiten Wert Broadcast-SISMA zur Genauigkeit der Satellitenüberwachung durch das Bodensegment aufweist,
wobei der zweite Wert Broadcast-SISMA im Unterschied zum ersten Wert SISMA den Ausfall einer Beobachtungsstation des Bodensegments berücksichtigt,
wobei ein Schwellwert für den zweiten Wert Broadcast-SISMA vorgesehen ist, und
wobei die Vorrichtung ausgebildet ist, die folgenden Schritte auszuführen: Übertragen des Schwellwerts mit den Integritätsinformationen für einen Satelliten anstelle des zweiten Wertes Broadcast-SISMA, wenn dieser den Schwellwert überschreitet und der erste Wert SISMA kleiner als der Schwellwert für den Satelliten ist; und
Ändern der zu übertragenden Integritätsinformationen, sobald der zweite Wert Broadcast-SISMA und der erste Wert SISMA für den Satelliten jeweils den Schwellwert überschreiten.

Insbesondere ist die Vorrichtung zum Ausführen eines Verfahrens nach der Erfindung und wie oben beschrieben ausgebildet.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
- Fig. 1: ein Satellitennavigationssystem mit einem Ausführungsbeispiel einer Vorrichtung zur Integritätskommunikation gemäß der Erfindung; und in
- Fig. 2: ein Flussdiagramm eines Ausführungsbeispiels Verfahrens zur Integritätskommunikation gemäß der Erfindung.

Im Folgenden können gleiche und/oder funktional gleiche Elemente mit den gleichen Bezugszeichen versehen sein.

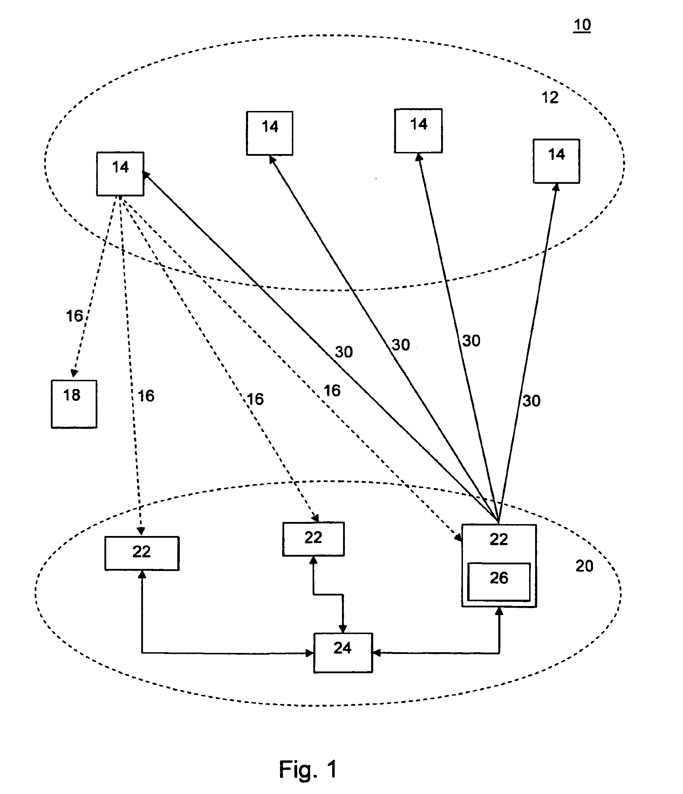

In Fig. 1 ist ein Satellitennavigationssystem 10 mit einem Raumsegment 12 und einem Bodensegment 20 dargestellt. Das Raumsegment 12 umfasst mehrere Satelliten 14, die auf ihrem jeweiligen Orbit um das Bodensegment 20 kreisen. Jeder Satellit sendet Navigationssignale 16 (SIS) aus, die von Nutzungssystemen 18 wie beispielsweise mobilen Navigationsgeräten sowie von Beobachtungsstationen 22 des Bodensegments 20 empfangen werden können. Die Beobachtungsstationen 22 sind insbesondere zur Überwachung der Satelliten 14 und Koordination von beispielsweise der Integritätskommunikation im Satellitennavigationssystem 10 vorgesehen. Sie entsprechen daher den eingangs erwähnten GSSen. Die Beobachtungsstationen werten die empfangenen Navigationssignale 16 aus, indem sie die mit jedem Navigationssignal 16 übertragenen Daten eines Satelliten 14, insbesondere Orbit und Zeitpunkt der Signalerzeugung sowie Signalstruktur überprüfen.

Die Beobachtungsstationen 22 sind ferner mit einer zentralen Steuerstation 24 kommunikationsmäßig verbunden, in der alle Messdaten der Beobachtungsstationen 22 zusammenlaufen und ausgewertet werden. Die zentrale Steuerstation 24 umfasst auch eine zentrale Integritätsprozessierung, mit der die Integrität der von den Beobachtungsstationen empfangenen Messdaten ermittelt und entsprechend die Integritätskommunikation im Satellitennavigationssystem 10 gesteuert wird. Die Steuerstation 24 steuert auch das Aussenden von Integritätsinformationen 30 an die Satelliten 14 über Beobachtungsstationen 22. Hierzu kann sie Übertragungsmittel 26 in einer Beobachtungsstation 22 derart ansteuern, dass sie Integritätsinformationen 30 zu den Satelliten 14, insbesondere zu den von den Satelliten 14 ausgesandten SIS, über die Satelliten 14 an Nutzungssysteme 18 übertragen.

Die Integritätsinformationen 30 enthalten wie bei Galileo Informationen zum Zustand eines Satelliten bzw. zum Zustand des vom Satelliten ausgesandten SIS 16, insbesondere ein Integrity Flag IF, welches den Status eines Satelliten als "Don't Use", "Not Monitored" oder "OK" mit einem entsprechenden SISMA-Wert angegeben kann. Bei Galileo wird der SISMA-Wert jedes Satelliten 14 des Raumsegments 12 etwa alle 30 Sekunden übertragen, und zwar jeweils der größte SISMA-Wert aus einer Meßperiode der Signale SIS 16 eines Satelliten, um das Integritätsrisiko eines Nutzers bzw. Nutzungssystems 18 möglichst gering zu halten. Weiterhin enthalten die Integritätsinformationen 30 einen zweiten Wert mit Bezug zum eingangs erwähnten Broadcast-SISMA-Wert.

Dieser zweite Wert ist unter normalen Gegebenheiten der Broadcast-SISMA-Wert, der im Unterschied zum SISMA-Wert zusätzlich den Ausfall der Beobachtungsstation 22 berücksichtigt, deren Verlust den ersten SISMA-Wert am meisten ansteigen lassen würde. Der Broadcast-SISMA stellt daher für Nutzer bzw. Nutzungssysteme den Worst-case dar und ist demnach pessimistischer als der SISMA-Wert. Der SISMA-Broadcast-Wert kann auch so groß werden, dass Nutzer bzw. Nutzungssysteme das Integritätsrisiko als derart hoch einstufen, dass sie das Satellitennavigationssystem 10 nicht mehr nutzen, obwohl an sich eine ausreichende Integrität gegeben wäre, da beispielsweise überhaupt keine Beobachtungsstation ausgefallen ist.

Um zu vermeiden, dass also Nutzer bzw. Nutzungssysteme aufgrund eines großen Broadcast-SISMA-Wertes das Satellitennavigationssystem 10 nicht benutzen aufgrund nicht ausreichender Integrität, kann ein Schwellwert als ein festgelegter maximaler Wert für den Broadcast-SISMA-Wert vorgesehen werden. Wenn der Broadcast-SISMA-Wert diesen Schwellwert übersteigt, wird anstelle des Broadcast-SISMA-Wertes der Schwellwert mit den Integritätsinformationen übermittelt. Dies birgt wiederum die Gefahr in sich, dass ein Nutzer bzw. Nutzungssystem sein Integritätsrisiko unterschätzt, da der tatsächliche SISMA-Wert größer als der Schwellwert sein kann. In diesem Fall würde ein Nutzer bzw. Nutzungssystem aufgrund der erhaltenen Integritätsinformationen und dem Schwellwert als Ersatz für den Broadcast-SISMA-Wert den Navigationsinformationen vertrauen und Integrität annehmen, obwohl tatsächlich ein sehr hohes Integritätsrisiko besteht.

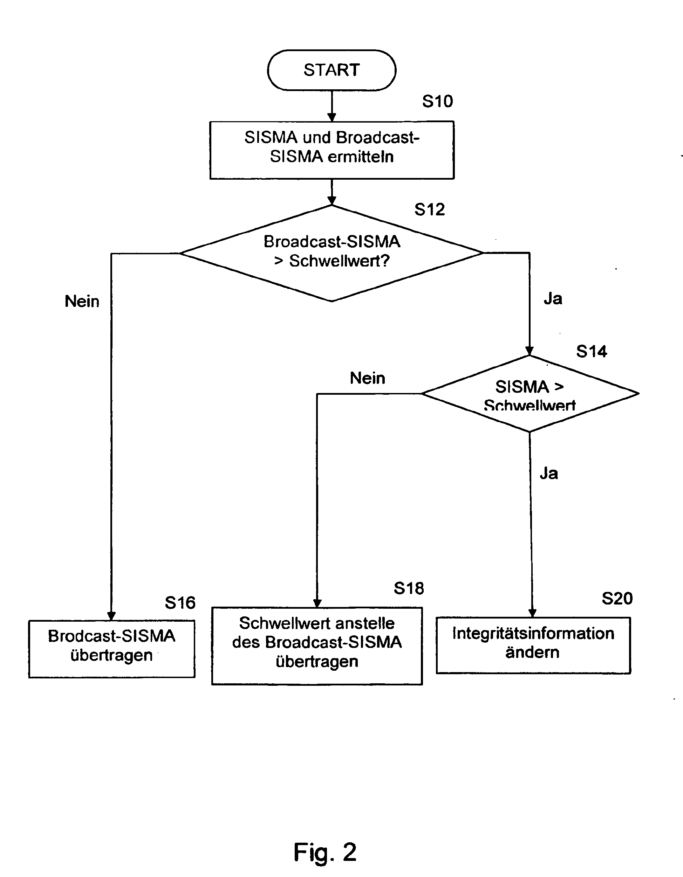

Insbesondere hier setzt nun die vorliegende Erfindung an, indem das folgende in Fig. 2 anhand eines Flussdiagramms skizzierte Verfahren, das beispielsweise in der zentralen Steuerstation 24 des Bodensegments 20 implementiert sein kann, angewandt wird:

Zunächst wirf im Schritt S10 der SISMA-Wert und der Broadcast-SISMA-Wert für jeden durch die Beobachtungsstationen 22 überwachten Satelliten 14 ermittelt. Im darauffolgenden Schritt S12 wird überprüft, ob der ermittelte Broadcast-SISMA-Wert eines Satelliten größer als der vorgesehene Schwellwert ist. Wenn der Broadcast-SISMA-Wert kleiner als der Schwellwert ist, wird im Schritt S16 der Broadcast-SISMA-Wert mit den Integritätsinformationen übertragen. Ist der Broadcast-SISMA-Wert größer als der Schwellwert, wird in einen weiteren Überprüfungszweig verzweigt und mit Schritt S14 fortgefahren. In Schritt S14 wird überprüft, ob der für einen Satelliten ermittelte SISMA-Wert größer als der Schwellwert ist. Ist der SISMA-Wert kleiner als der Schwellwert, wird im Schritt S18 der Schwellwert als Maximalwert anstelle des Broadcast-SISMA-Wertes mit den Integritätsinformationen übertragen. Ergibt die Überprüfung in Schritt S14, dass der SISMA-Wert größer ist als der Schwellwert, können die Integritätsinformationen geändert werden. Die Änderung der Integritätsinformationen kann beispielsweise entweder dadurch erfolgen, dass entweder ein Flag "not monitored" für den betreffenden Satelliten gesetzt wird, oder es wird an die Nutzer bzw. Nutzungssysteme eine sofort anwendbare Erhöhung des SISMA-Wertes für den betreffenden Satelliten übertragen.

Mit der Erfindung kann im Wesentlichen die Unterschätzung des Integritätsrisikos durch einen Nutzer bzw. ein Nutzungssystem vermieden werden, da der Nutzer bzw. das Nutzungssystem relativ sicher sein kann, dass der vom Bodensegment bzw. -netzwerk verwendete SISMA-Wert immer kleiner als der Broadcast-SISMA-Wert ist. Solange der Broadcast-SISMA-Wert aufgrund des Schwellwerts nicht erhöht wird, unterschätzt der Nutzer bzw. das Nutzungssystem mit Hilfe der Erfindung nur das Diskontinuitätsrisiko.

### Bezugszeichen

- 10: Satellitennavigationssystem
- 12: Raumsegment
- 14: Satelliten
- 16: Navigationssignale
- 18: Nutzungssysteme
- 20: Bodensegment
- 22: Beobachtungsstationen
- 24: zentrale Steuerstation
- 26: Übertragungsmittel
- 30: Integritätsinformationen
- S10-S20: Verfahrensschritte

## Patentansprüche

1. Verfahren zur Integritätskommunikation in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (22), welche die Satelliten (14) überwachen, umfasst,
wobei das Bodensegment die Integritätskommunikation **dadurch** steuert, dass es Integritätsinformationen (30) über die Satelliten an Nutzungssysteme mit den Navigationssignalen verteilt,
wobei die Integritätsinformationen für einen Satelliten einen ersten Wert SISMA und einen zweiten Wert Broadcast-SISMA zur Genauigkeit der Satellitenüberwachung durch das Bodensegment aufweist,
wobei der zweite Wert Broadcast-SISMA im Unterschied zum ersten Wert SISMA den Ausfall einer Beobachtungsstation des Bodensegments berücksichtigt,
**dadurch gekennzeichnet, dass**
ein Schwellwert für den zweiten Wert Broadcast-SISMA vorgesehen ist, und
das Verfahren die folgenden Schritte aufweist:
Übertragen des Schwellwerts mit den Integritätsinformationen für einen Satelliten anstelle des zweiten Wertes Broadcast-SISMA (S18), wenn dieser den Schwellwert überschreitet (S12) und der erste Wert SISMA kleiner als der Schwellwert für den Satelliten ist (S14); und
Ändern der zu übertragenden Integritätsinformationen (S20), sobald der zweite Wert Broadcast-SISMA und der erste Wert SISMA für den Satelliten jeweils den Schwellwert überschreiten.

2. Verfahren nach Anspruch 1, **dadurch gekennzeichnet, dass** das Ändern der Integritätsinformationen das Kennzeichnen des Satelliten in den Integritätsinformationen als "nicht überwacht" aufweist.

3. Verfahren nach Anspruch 1 oder 2, **dadurch gekennzeichnet, dass** das Ändern der Integritätsinformationen das Erhöhen des ersten Wertes SISMA für den Satelliten mit den Integritätsinformationen aufweist.

4. Vorrichtung zur Integritätskommunikation in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (22), welche die Satelliten (14) überwachen, umfasst,
wobei die Vorrichtung ausgebildet ist, die Integritätskommunikation **dadurch** zu steuern, dass sie Integritätsinformationen über die Satelliten an Nutzungssysteme mit den Navigationssignalen verteilt, wobei die Integritätsinformationen für einen Satelliten einen ersten Wert SISMA und einen zweiten Wert Broadcast-SISMA zur Genauigkeit der Satellitenüberwachung durch das Bodensegment aufweist.
wobei der zweite Wert Broadcast-SISMA im Unterschied zum ersten Wert SISMA den Ausfall einer Beobachtungsstation des Bodensegments berücksichtigt,
**dadurch gekennzeichnet, dass**
ein Schwellwert für den zweiten Wert Broadcast-SISMA vorgesehen ist, und
die Vorrichtung ausgebildet ist, die folgenden Schritte auszuführen:
Übertragen des Schwellwerts mit den Integritätsinformationen für einen Satelliten anstelle des zweiten Wertes Broadcast-SISMA (S18), wenn dieser den Schwellwert überschreitet (S12) und der erste Wert SISMA kleiner als der Schwellwert für den Satelliten ist (S14); und
Ändern der zu übertragenden Integritätsinformationen (S20), sobald der zweite Wert Broadcast-SISMA und der erste Wert SISMA für den Satelliten jeweils den Schwellwert überschreiten.

5. Vorrichtung nach Anspruch 4, **dadurch gekennzeichnet, dass** sie zum Ausführen eines Verfahrens nach einem der Ansprüche 1 bis 3 ausgebildet ist.

## Claims

1. Method for integrity communication in a satellite navigation system (10) which comprises a space segment (12) having a plurality of satellites (14), which emit navigation signals (16) for reception and evaluation by utilizing systems (18) for position finding, and a ground segment (20) having a plurality of observation stations (22) which monitor the satellites (14), wherein the ground segment controls the integrity communication by distributing integrity information (30) about the satellites to utilizing systems with the navigation signals,
wherein the integrity information for a satellite has a first value SISMA and a second value Broadcast-SISMA for the accuracy of the satellite monitoring by the ground segment,
wherein the second value Broadcast-SISMA, in contrast to the first value SISMA, takes account of the failure of an observation station in the ground segment, **characterized in that**
a threshold value is provided for the second value Broadcast-SISMA, and
the method has the following steps:
the threshold value is transmitted with the integrity information for a satellite instead of the second value Broadcast-SISMA (S18) if the latter exceeds the threshold value (S12) and the first value SISMA is lower than the threshold value for the satellite (S14); and
the integrity information (S20) to be transmitted is changed as soon as the second value Broadcast-SISMA and the first value SISMA for the satellite each exceed the threshold value.

2. Method according to Claim 1, **characterized in that** the changing of the integrity information involves identifying the satellite in the integrity information as "not monitored".

3. Method according to Claim 1 or 2, **characterized in that** the changing of the integrity information involves increasing the first value SISMA for the satellite with the integrity information.

4. Apparatus for integrity communication in a satellite navigation system (10) which comprises a space segment (12) having a plurality of satellites (14), which emit navigation signals (16) for reception and evaluation by utilizing systems (18) for position finding, and a ground segment (20) having a plurality of observation stations (22) which monitor the satellites (14),
wherein the apparatus is designed to control the integrity communication by distributing integrity information about the satellites to utilizing systems with the navigation signals, wherein the integrity information for a satellite has a first value SISMA and a second value Broadcast-SISMA for the accuracy of the satellite monitoring by the ground segment,
wherein the second value Broadcast-SISMA, in contrast to the first value SISMA, takes account of the failure of an observation station in the ground segment, **characterized in that**
a threshold value is provided for the second value Broadcast-SISMA, and
the apparatus is designed to carry out the following steps:
the threshold value is transmitted with the integrity information for a satellite instead of the second value Broadcast-SISMA (S18) if the latter exceeds the threshold value (S12) and the first value SISMA is lower than the threshold value for the satellite (S14); and
the integrity information (S20) to be transmitted is changed as soon as the second value Broadcast-SISMA and the first value SISMA for the satellite each exceed the threshold value.

5. Apparatus according to Claim 4, **characterized in that** it is designed to execute a method according to one of Claims 1 to 3.

## Revendications

1. Procédé de communication de l'intégrité dans un système de navigation par satellite (10) qui comprend un segment spatial (12) comportant plusieurs satellites (14) émettant des signaux de navigation (16) destinés à être reçus et évalués par des systèmes utilisateurs (18) pour la détermination de position, et un segment sol (20) comportant plusieurs stations d'observation (22) qui surveillent les satellites (14),
dans lequel le segment sol commande la communication d'intégrité de manière à distribuer des informations d'intégrité (30) concernant les satellites à des systèmes utilisateurs à l'aide des signaux de navigation,
dans lequel les informations d'intégrité concernant un satellite comprennent une première valeur SISMA et une seconde valeur SISMA diffusée destinées à la précision de la surveillance des satellites par le segment sol, dans lequel la seconde valeur SISMA diffusée, contrairement à la première valeur SISMA prend en compte la défaillance d'une station d'observation du segment sol,
**caractérisé en ce que**
une valeur de seuil est prévue pour la seconde valeur SISMA diffusée et **en ce que**
le procédé comprend les étapes suivantes :
transmission de la valeur de seuil avec les informations d'intégrité concernant un satellite au lieu de la seconde valeur SISMA diffusée (S18) lorsque celle-ci dépasse la valeur de seuil (S12) et lorsque la première valeur SISMA est inférieure à la valeur de seuil pour le satellite (S14) ; et
modification des informations d'intégrité à transmettre (S20) dès que la seconde valeur SISMA diffusée et la première valeur SISMA pour le satellite dépassent respectivement la valeur de seuil.

2. Procédé selon la revendication 1, **caractérisé en ce que** la modification des informations d'intégrité comprend la caractérisation du satellite dans les informations d'intégrité comme étant "non surveillé".

3. Procédé selon la revendication 1 ou 2, **caractérisé en ce que** la modification des informations d'intégrité comprend l'augmentation de la première valeur SISMA pour le satellite à l'aide des informations d'intégrité.

4. Dispositif pour la communication d'intégrité dans un système de navigation par satellite (10) qui comprend un segment spatial (12) comportant plusieurs satellites (14) émettant des signaux de navigation (16) destinés à être reçus et évalués par des systèmes utilisateurs (18) pour la détermination de position, et un segment sol (20) comportant plusieurs stations d'observation (22) qui surveillent les satellites (14), dans lequel le dispositif est conçu pour commander la communication d'intégrité de manière à distribuer des informations d'intégrité concernant les satellites à des systèmes utilisateurs à l'aide des signaux de navigation, dans lequel les informations d'intégrité concernant un satellite comprennent une première valeur SISMA et une seconde valeur SISMA diffusée destinées à la précision de la surveillance des satellites par le segment sol,
dans lequel la seconde valeur SISMA diffusée, contrairement à la première valeur SISMA, prend en compte la défaillance d'une station d'observation du segment sol,
**caractérisé en ce que**
une valeur de seuil est prévue pour la seconde valeur SISMA diffusée et **en ce que**
le dispositif est conçu de manière à exécuter les étapes suivantes :
transmission de la valeur de seuil avec les informations d'intégrité concernant un satellite au lieu de la seconde valeur SISMA diffusée (S18) lorsque celle-ci dépasse la valeur de seuil (S12) et lorsque la première valeur SISMA est inférieure à la valeur de seuil pour le satellite (S14) ; et
modification des informations d'intégrité à transmettre (S20) dès que la seconde valeur SISMA diffusée et la première valeur SISMA pour le satellite dépassent respectivement la valeur de seuil.

5. Dispositif selon la revendication 4, **caractérisé en ce qu'**il est conçu pour mettre en oeuvre un procédé selon l'une quelconque des revendications 1 à 3.
